# EUROPEAN PATENT APPLICATION

(11) **EP 4 782 732 A1**
(43) Date of publication of application: **29.07.2026**
(21) Application number: 24866610.9
(22) Date of filing: 16.05.2024
(51) Int. Cl.: F16K 31/04

(54) **ELECTRIC VALVE**

(30) Priority: 22.09.2023 JP 2023158830
(71) Applicant: Fujikoki Corporation, Tokyo 158-0082 (JP)
(72) Inventor: ARAI,Yusuke, Tokyo 158-0082 (JP); YOSHIDA,Tatsuya, Tokyo 158-0082 (JP); HAYAKAWA,Junya, Tokyo 158-0082 (JP); MATSUBARA,Yuta, Tokyo 158-0082 (JP)
(74) Representative: Ter Meer Steinmeister & Partner
(86) International application number: PCT/JP2024/018192
(87) International publication number: WO 2025/062733

(57) **Abstract**

Provided is an electric valve capable of enhancing a degree of freedom of an opening/closing vale control while ensuring downsizing and reduced weight of the valve.

The electric valve includes a valve main body including a first flow passage through which a refrigerant is introduced, a second flow passage through which the refrigerant is flown out, a third flow passage through which the refrigerant is passed, and a valve seat formed between the first flow passage and the second flow passage, a valve shaft body including a valve element portion configured to be seated on the valve seat, a motor disposed on the valve main body on an opposite side with respect to the valve seat interposing the third flow passage, and a conversion mechanism configured to convert a rotation of a rotor of the motor into a linear movement and to transmit the same to the valve shaft body.

## Description

### [Technical Field]

The present invention relates to electric valves.

### [Background Art]

In a refrigeration cycle adopted in air conditioning devices disposed in automobiles, for example, a thermosensitive temperature expansion valve designed to adjust an amount of passing of refrigerant according to temperature is used. In such a temperature expansion valve, a power element that drives a valve element using a pressure of a working gas sealed therein is conventionally adopted.

In general, power elements are useful in that they can control an opening and closing of valve of an expansion valve by sensing the temperature of a refrigerant by a simple mechanical structure, but in recent refrigeration cycles, there are demands for an opening/closing valve control having a greater degree of freedom, and for example, a forcible valve closing operation may become necessary regardless of the temperature of the refrigerant. A configuration has already been actually utilized in which an electromagnetic valve and an expansion valve are arranged in series within the refrigeration cycle, and a flow of the refrigerant passing through the expansion valve may be interrupted by a shut-off operation of the electromagnetic valve, but since such configuration uses two valve devices, the structure is increased in size.

In contrast, Patent Literature 1 discloses an electric valve that is composed of an assembly of a valve unit and a passage body, and that can perform a valve opening and closing operation using a stepping motor of the valve unit. Such an electric valve may be used as the expansion valve of a refrigeration cycle, and by communicating with an external device, the stepping motor can be operated regardless of the temperature of the refrigerant, and the valve element may be caused to come into contact with and separate from a valve seat of the passage body arbitrarily.

### [Citation List]

### [Patent Literature]

[PTL 1] Japanese Patent Application Laid-Open Publication No. 2023-53708

### [Summary of Invention]

### [Technical Problem]

However, according to the electric valve of patent literature 1, a valve unit is arranged in contact with a flow passage disposed in a passage body and through which a high-pressure refrigerant flows. According to such a configuration, an internal pressure of a can covering a rotor etc. is increased by having the high-pressure refrigerant introduced thereto, such that a strength of the can and engagement members must be enhanced and pressure resistance of a seal must be increased in response, which leads to increase in size and weight of the configuration.

The present invention aims at providing an electric valve capable of enhancing the degree of freedom of an opening/closing valve while ensuring downsizing and reduced weight of the valve.

### [Solution to Problem]

In order to achieve the objects described above, an electric valve according to the present invention includes:
a valve main body including a first flow passage through which a refrigerant is introduced, a second flow passage through which the refrigerant is flown out, a third flow passage through which the refrigerant is passed, and a valve seat formed between the first flow passage and the second flow passage;
a valve shaft body including a valve element portion configured to be seated on the valve seat;
a motor disposed on the valve main body on an opposite side with respect to the valve seat interposing the third flow passage; and
a conversion mechanism configured to convert a rotation of a rotor of the motor into a linear movement and to transmit the same to the valve shaft body.

### [Advantageous Effects of Invention]

The present invention enables to provide an electric valve capable of enhancing the degree of freedom of the opening/closing valve while ensuring downsizing and reduced weight of the valve.

### [Brief Description of Drawings]

[FIG. 1] FIG. 1 is a side view of an electric valve according to a first embodiment.
[FIG. 2] FIG. 2 is a vertical cross-sectional view of the electric valve according to the first embodiment in a valve closed state.
[FIG. 3] FIG. 3 is a vertical cross-sectional view of the electric valve according to the first embodiment in a valve opened state.
[FIG. 4] FIG. 4 is a cross-sectional view illustrating a periphery of a motor unit used in the first embodiment.
[FIG. 5] FIG. 5 is a vertical cross-sectional view of an electric valve according to a second embodiment in a valve closed state.
[FIG. 6] FIG. 6 is a vertical cross-sectional view of the electric valve according to the second embodiment in a valve opened state.
[FIG. 7] FIG. 7 is a perspective view of an alignment member according to the second embodiment.
[FIG. 8] FIG. 8 is a vertical cross-sectional view of a holder according to a modified example.
[FIG. 9] FIG. 9 is a top view of the holder.
[FIG. 10] FIG. 10 is a vertical cross-sectional view of an electric valve according to a third embodiment in a valve closed state.

### [Description of Embodiments]

Embodiments of the present invention will be described below with reference to the drawings.

### (Definition of Direction)

In the present specification, a direction from a valve seat 20 toward a motor unit 100 is defined as an "upward direction", and in contrast, a direction from the motor unit 100 toward the valve seat 20 is defined as a "downward direction". An axis of an electric valve 1 is denoted as L.

### (First Embodiment)

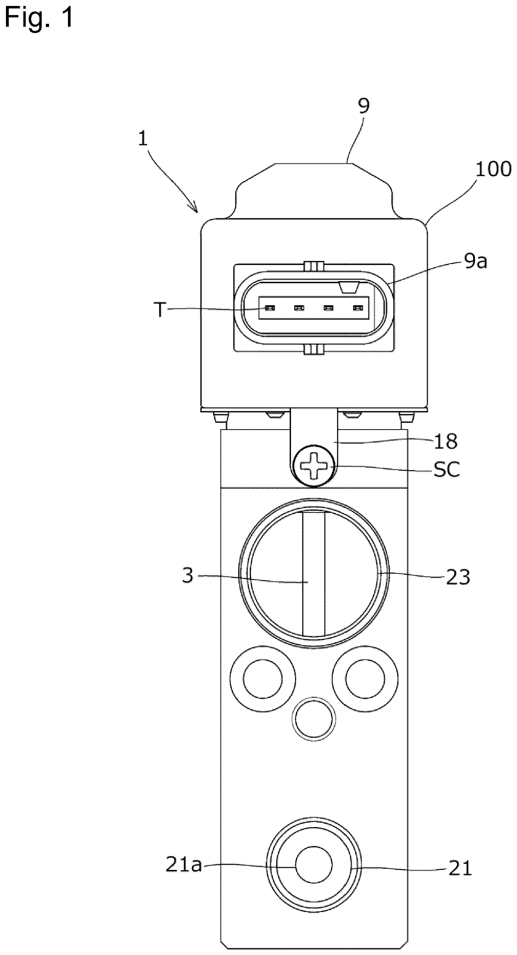

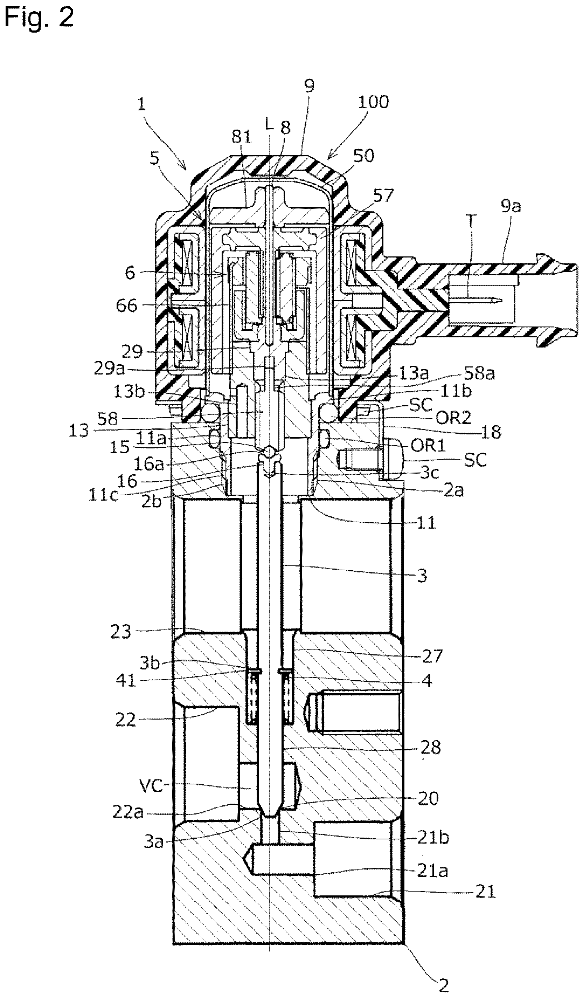

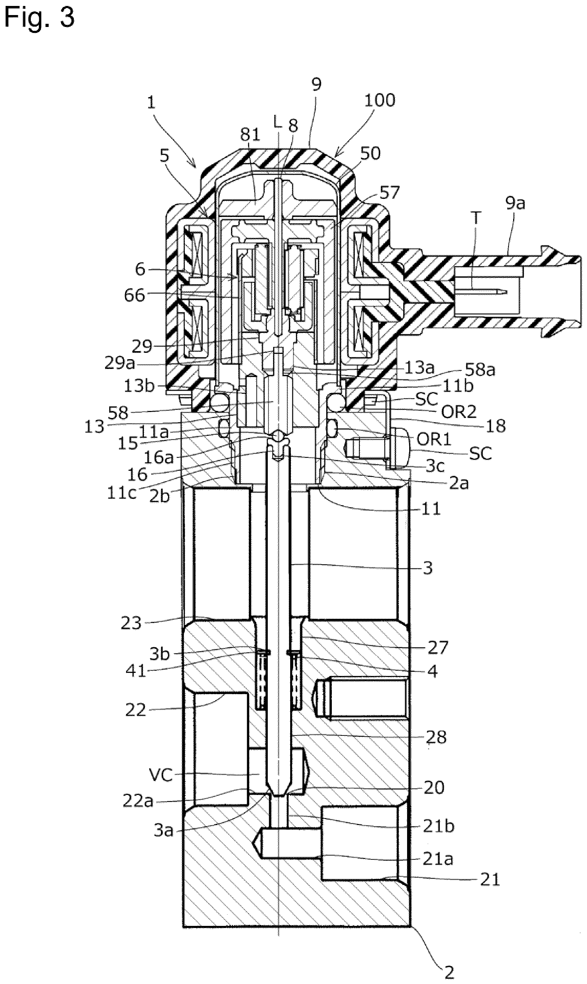

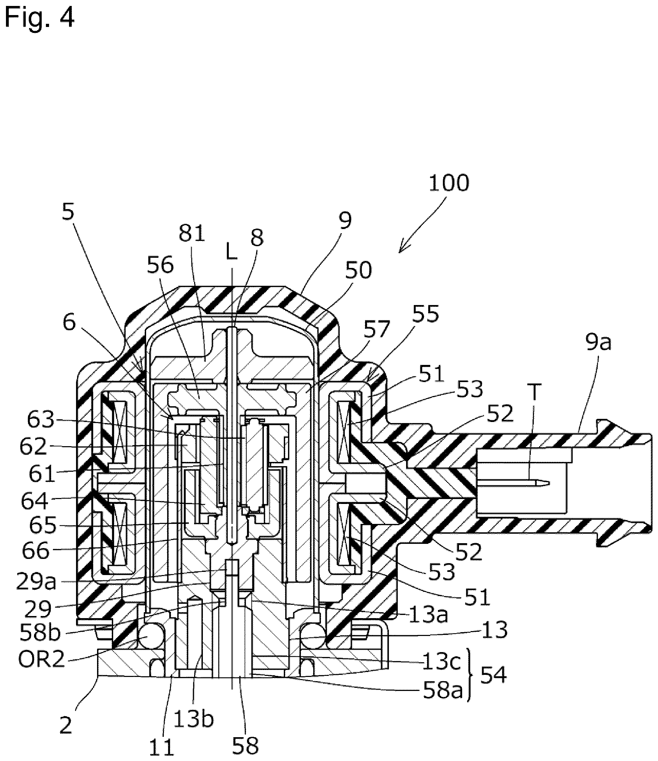

FIG. 1 is a side view of the electric valve 1 according to the present embodiment from a first flow passage 21 side. FIG. 2 is a vertical cross-sectional view of the electric valve 1 in a valve closed state, and FIG. 3 is a vertical cross-sectional view of the electric valve 1 in a valve opened state. FIG. 4 is a cross-sectional view illustrating a periphery of the motor unit 100.

In FIGs. 2 and 3, the electric valve 1 includes a valve main body 2, a valve shaft body 3, and the motor unit 100.

The valve main body 2 includes the first flow passage 21, a second flow passage 22, a first connection passage 21a, an orifice passage 21b, a second connection passage 22a, and a return flow passage, i.e., third flow passage, 23. The first flow passage 21 and the first connection passage 21a are each extended orthogonally with respect to the axis L, and an inner diameter of the first flow passage 21 is greater than an inner diameter of the first connection passage 21a. Further, the second flow passage 22 and the second connection passage 22a are each extended orthogonally with respect to the axis L at an opposite side from the first flow passage 21 interposing the valve main body 2, and an inner diameter of the second flow passage 22 is greater than an inner diameter of the second connection passage 22a. The orifice passage 21b extends along the axis L, with a lower end thereof communicated with a vicinity of a tip of the first connection passage 21a, and an upper end thereof communicated with a vicinity of a tip of the second connection passage 22a. An interior of the second connection passage 22a constitutes a valve chamber VC, and the upper end of the orifice passage 21b constitutes the valve seat 20. A return flow passage 23 extends in a direction intersecting the axis L between the motor unit 100 and the second flow passage 22. A recessed portion 2a that communicates with the return flow passage 23 is formed at an upper end of the valve main body 2.

The first flow passage 21 is a supply-side flow passage connected to a condenser (not shown) of a refrigeration cycle, and a high-pressure refrigerant is supplied to the orifice passage 21b through the supply-side flow passage. The second flow passage 22 is a discharge-side flow passage, and fluid within the valve chamber VC is discharged to an evaporator (not shown) outside the electric valve through the discharge-side flow passage. A refrigerant having passed through the evaporator is introduced into the return flow passage 23.

In the valve main body 2, a valve shaft insertion hole 28 is formed upward from the second connection passage 22a along the axis L, which receives the valve shaft body 3 to fit slidably therein, and which has a function to guide the valve shaft body 3. Further, an annular hole portion 27 formed on an upper portion of the valve shaft insertion hole 28 and communicated with the return flow passage 23 has a larger diameter than the valve shaft insertion hole 28 and has a function to accommodate a coil spring 4.

The valve shaft body 3 made of metal in the form of a single elongated rod shape is arranged along the axis L, and passes through the valve chamber VC, the valve shaft insertion hole 28, the annular hole portion 27, and the return flow passage 23. A valve element portion 3a having a conical shape that is reduced in diameter toward a downward direction is formed at a lower end of the valve shaft body 3. As illustrated in FIG. 2, in a state where the valve element portion 3a is seated on the valve seat 20 of the valve main body 2, the flow of refrigerant in the orifice passage 21b is regulated. This state is referred to as a non-communicated state. However, it may be possible to allow a regulated amount of refrigerant to flow even when the valve shaft body 3 is seated on the valve seat 20. Meanwhile, in a state where the valve element portion 3a is separated from the valve seat 20, as illustrated in FIG. 3, the flow of refrigerant passing through the orifice passage 21b is increased. This state is referred to as a communicated state.

The valve shaft body 3 includes a circumferential groove 31b within the annular hole portion 27. A plate member, referred to as a retaining ring, 41 having a C-shape in the axis L direction is fit and arranged in the circumferential groove 3b. The coil spring 4 arranged between the retaining ring 41 and a bottom wall of the annular hole portion 27 urges the valve shaft body 3 upward via the retaining ring 41.

### (Configuration of Motor Unit)

Next, the motor unit 100 will be described with reference to FIGs. 2 to 4. The motor unit 100 is composed of a can 50 having a cylindrical shape with a top that is fixed to the valve main body 2 through a holder 11 having a cylindrical shape, a stator 55 externally fit to the can 50, a rotor 57 disposed inside the can 50, a cover 9 having an approximately tubular shape with a top that covers the circumference of the stator 55, a gear-type deceleration mechanism 6 that decelerates the rotation of the rotor 57 and transmits the same, and a screw drive member, also referred to as a drive member, 58 that converts a rotary movement of an output gear of the deceleration mechanism 6 through a screw feeding mechanism 54 (FIG. 4) into a linear movement and transmits the same to the valve shaft unit 3. The can refers to a member having a tubular portion that is attached to the valve main body side of the electric valve such that an interior thereof is sealed, though the can 50 having a tubular portion with a bottom. The can 50 accommodates the rotor 57, the deceleration mechanism 6, and the screw feeding mechanism 54. More accurately, a portion of the screw feeding mechanism 54 is accommodated in the can 50, and the entirety of the screw feeding mechanism 54 is accommodated in a connecting body between the can 50 and the holder 11.

A stepping motor 5 includes the rotor 57 that is arranged rotatably with respect to the can 50 in an interior of the can 50, and that has a rotor supporting member 56 fixed to an inner side on an upper portion thereof. The stepping motor 5 is composed only of the rotor 7, and does not include the stator 55. The stator 55 composed of a yoke 51, a bobbin 52, and a coil 53 is fit and secured to an outer side of the can 50, and is covered by the cover 9 made of resin. The cover 9 includes a connector portion 9a. The connector portion 9a is formed along the axis of the return flow passage 23, and in the interior thereof is disposed a terminal T connected to a stepping motor-driving circuit board (not shown).

The holder 11 is formed by consecutively connecting a main body 11a having a tubular shape, and a flange portion 11b extended outward in a radial direction from an upper end of the main body 11a and bonded to a lower end of the can 50. A male screw 11c is formed at an outer circumference of a lower portion of the main body 11a. By engaging the male screw 11c to a female screw 2b formed on an inner circumference of the recessed portion 2a of the valve main body 2, the can 50 is fixed via the holder 11 to the valve main body 2. A space between the main body 11a and the recessed portion 2a is sealed by an O-ring OR1.

A screw bearing member 13 is fit by press-fitting to an inner circumference of the upper portion of the holder 11. The screw bearing member 13 includes a through hole 13a that extends along the axis L, and a communication hole 13b that extends in parallel with the axis L from the lower end of the screw bearing member 13 and that opens at the outer circumference. The communication hole 13b has a function to introduce the refrigerant that flows from the return flow passage 23 via the recessed portion 2a to the lower side of the screw bearing member 13 into the can. A thin wall tubular body 66 is fixed to the outer circumference at the upper end of the screw bearing member 13. Further, an output shaft portion 29 having a stepped cylindrical shape is rotatably fit to the upper portion of the through hole 13a of the screw bearing member 13.

In FIG. 4, the deceleration mechanism 6 includes, on the inner circumference side of the rotor 57, a sun gear 61 formed integrally with the rotor supporting member 56, a fixing ring gear 62 fixed to the valve main body 2 via the thin wall tubular body 66, a planetary gear 63 arranged between and meshed respectively with the sun gear 61 and the fixing ring gear 62, a carrier 64 rotatably supporting the planetary gear 63, and an output gear member 65 having a tubular shape with a bottom and having teeth that mesh with the planetary gear 63 provided on an inner circumference thereof, by which a mechanical paradox planetary gear deceleration mechanism is composed. The number of teeth of the fixing ring gear 62 is set to differ from the number of teeth of the output gear member 65.

An axial member 8 passes through and rotatably retains the rotor supporting member 56 and the sun gear 61, and an upper end of the axial member 8 is supported by a supporting member 81 arranged on an inner side of a top portion of the can 50.

An upper portion of the output shaft portion 29 is press-fit to a center opening at a bottom portion of the output gear member 65, and a lower end of the axial member 8 is rotatably fit to an opening at the upper portion of the output shaft portion 29.

A male screw portion 58a formed at a lower portion of a screw drive member 58 is screw-engaged to a female screw portion 13c formed at a lower portion of the through hole 13a of the screw bearing member 13. A rotary movement of the output gear member 65, i.e., decelerated rotary movement of the rotor 7, is converted into a linear movement along the axis L by a screw feeding mechanism, i.e., conversion mechanism, 54 composed of the male screw portion 58a and the female screw portion 13c.

A slit 29a is formed at a lower end of the output shaft portion 29, and a blade 58b that protrudes along the axis L is formed at an upper end of the screw drive member 58, wherein the slit 29a and the blade 58b mutually slidably engage with each other. Thereby, the output shaft portion 29 is connected in an integrally rotatable manner to the screw drive member 58, and when the output gear member 65, i.e., the rotor 57, rotates, the output shaft portion 29 and the screw drive member 58 rotate integrally, but they are also relatively movable in linear movement along the axis L.

A ball 15 made of metal is coaxially welded to a lower end of the screw drive member 58. Meanwhile, a circular hole 3c is formed at an upper end of the valve shaft body 3, and a ball seat 16 made of metal is press-fit to the circular hole 3c. An upper end surface 16a having an increased diameter of the ball seat 16 is formed to have a spherical curved surface, more specifically, a shape in which a cone and a spherical surface are combined, and slidably holds the ball 15.

### (Assembly of Electric Valve)

An assembling process of the electric valve 1 will be described. At first, the retaining ring 41 is assembled to the valve shaft body 3. Further, in a state where the rotor 57 and the deceleration mechanism 6 are assembled to the inner side of the can 50, a rotor assembly in which the holder 11 is fixed to the lower end of the can 50 is prepared.

The coil spring 4 is inserted from above to the annular hole portion 27 of the valve main body 2 to which mechanical processing has been provided, and thereafter, the valve shaft body 3 is passed through from above into the recessed portion 2a and the inner side of the coil spring 4 and inserted to the valve shaft insertion hole 28. In this state, the upper end of the coil spring 4 abuts against a lower surface of the retaining ring 41.

Thereafter, the O-ring OR1 is arranged at an inner circumferential groove of the recessed portion 2a, an O-ring OR2 is arranged at an opening end of the recessed portion 2a, the male screw 11c of the holder 11 is engaged to the female screw 2b of the recessed portion 2a of the valve main body 2, and the rotor assembly is attached to the valve main body 2. In this state, the O-ring OR1 exerts a sealing mechanism between the main body 11a of the holder 11 and the recessed portion 2a. The flange portion 11b prevents the O-ring OR2 from falling off. The O-ring OR2 may be arranged on the holder 11 before engaging the holder 11 to the valve main body 2, or the O-ring OR2 may be inserted and assembled from the upper portion of the can after screw-engaging the holder 11 to the valve main body 2

From this state, the cover 9 together with the stator 55 is moved from above toward the can 50, and covers the can 50. By having the lower end of the cover 9 positioned on the upper surface side of the valve main body 2, the O-ring OR2 is arranged between the cover 9 and the holder 11, providing a seal between the members. A plate-shaped stay 18 is arranged astride the lower end of the cover 9 and the side wall of the valve main body 2, and both members are fixed by a screw SC. By connecting the connector portion 9a of the cover 9 to a connector not shown, an external control device and a circuit board of the electric valve 1 are connected via the terminal T in a manner capable of transmitting signals therebetween.

### (Operation of Electric Valve)

In a state where the rotor 57 of the stepping motor 5 is driven to rotate in one direction by feeding a valve close control signal with a predetermined number of pulses from the external control device to the stator 55, a rotation is entered from the sun gear 61 to the deceleration mechanism 6, and further, the rotation decelerated by the deceleration mechanism 6 is transmitted via the output shaft portion 29 to the screw drive member 58. In a state where the screw drive member 58 is rotated in one direction, the female screw portion 13c and the male screw portion 58a are relatively moved in a screw motion, and according to the rotation thereof, the screw drive member 58 is moved downward in the axis L direction.

In a state where the screw drive member 58 descends while rotating together with the ball 15, the valve shaft body 3 is urged downward via the ball seat 16 while causing rotational sliding movement between the ball 15 and the upper end surface 16a of the ball seat 16, such that the valve shaft body 3 descends against the urging force of the coil spring 4, and the valve element portion 3a seats on the valve seat 20 to realize a valve closed state. Thereby, the refrigerant that has been introduced into the first flow passage 21 from a condenser not shown cannot enter the valve chamber VC through the orifice passage 21b, and the flow of refrigerant is interrupted between the first flow passage 21 and the second flow passage 22.

Meanwhile, in a state where the rotor 57 of the stepping motor 5 is driven to rotate in the other direction by feeding a valve open control signal from a control device not shown to the stator 55, the screw drive member 58 is moved upward in the axis L direction via the deceleration mechanism 6 and the screw feeding mechanism 54. Thereby, a driving force that urges the valve shaft body 3 downward is eliminated, and the valve shaft body 3 is ascended according to the urging force of the coil spring 4. When the valve shaft body 3 is ascended, the valve element portion 3a is separated from the valve seat 20 and realizes a valve opened state. Thereby, refrigerant enters the valve chamber VC from the first flow passage 21 via the first connection passage 21a and the orifice passage 21b, and further, the refrigerant is flown out to the exterior of the electric valve 1 via the second connection passage 22a and the second flow passage 22. For example, the valve open control signal fed to the stator 55 is determined according to a signal from a temperature sensor attached to an outlet-side piping of the evaporator, based on which the amount of refrigerant passing through the orifice passage 21b during the valve opening and closing operation and while the valve is opened is controlled.

The refrigerant having been discharged from the second flow passage 22 passes through the evaporator not shown, enters the return flow passage 23 of the electric valve 1 in a relatively low-pressure state, then flows out of the electric valve 1 to reach a compressor not shown, and compressed as needed to be supplied to the condenser.

According to the present embodiment, in a case of a so-called regular flow in which the orifice passage 21b side is of high pressure and the valve chamber VC side is of low pressure interposing the valve seat 20, pressure in the valve opening direction constantly acts on the valve element portion 3a. However, since the deceleration mechanism 6 having a high deceleration ratio is arranged between the stepping motor 5 and the valve shaft unit 3, regardless of the pressure applied on the valve element portion 3a, position control of the valve element portion 3a may be realized infallibly in both the valve closed state and the valve opened state. Incidentally, even in the case of a so-called reverse flow in which the orifice passage 21b side is of low pressure and the valve chamber VC side is of high pressure interposing the valve seat 20, the electric valve 1 according to the present embodiment may be adopted. In that case, refrigerant from the condenser is introduced to the second flow passage 22, and refrigerant flows out from the first flow passage 21 toward the evaporator.

Further, the can 50 is arranged on an opposite side from the valve seat 20 interposing the return flow passage 23, and a low-pressure refrigerant is supplied from the adjacent return flow passage 23 via the recessed portion 2a and the communication hole 13b to the inner side of the can 50. Therefore, the wall thickness of the can 50 may be made relatively thin while using the supplied refrigerant to lubricate the deceleration mechanism 6, the strength of the respective screw portions may be relatively suppressed, and the O-rings OR1 and OR2 having a relatively low pressure resistance may be used, such that the can 50 contributes to downsizing, reducing weight of, and cutting costs related to the electric valve 1.

According further to the present embodiment, the shape of the valve main body 2 is approximately the same as the shape of the valve main body of a conventional expansion valve having a power element, such that in the refrigeration cycle that is already used, the valve may be replaced with the electric valve according to the present embodiment without any major design modifications.

### (Second Embodiment)

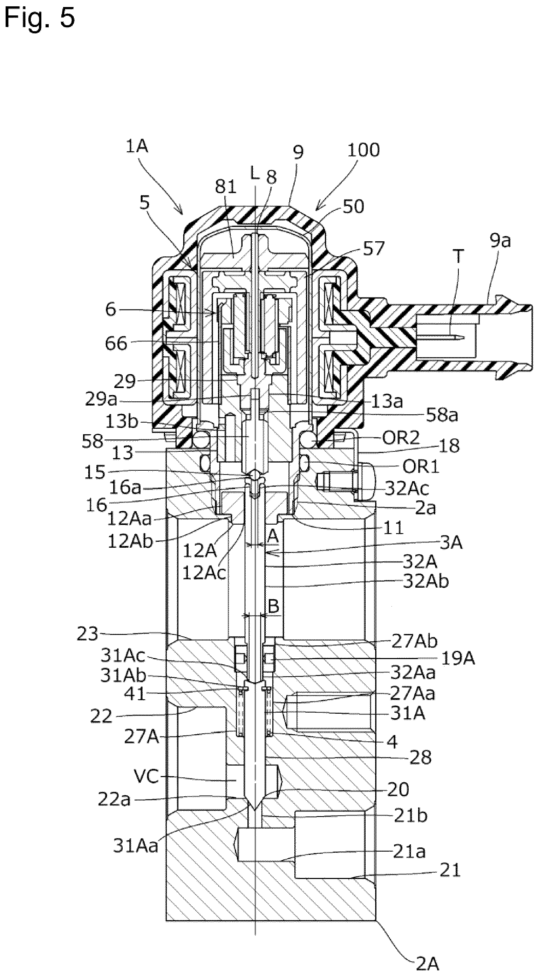

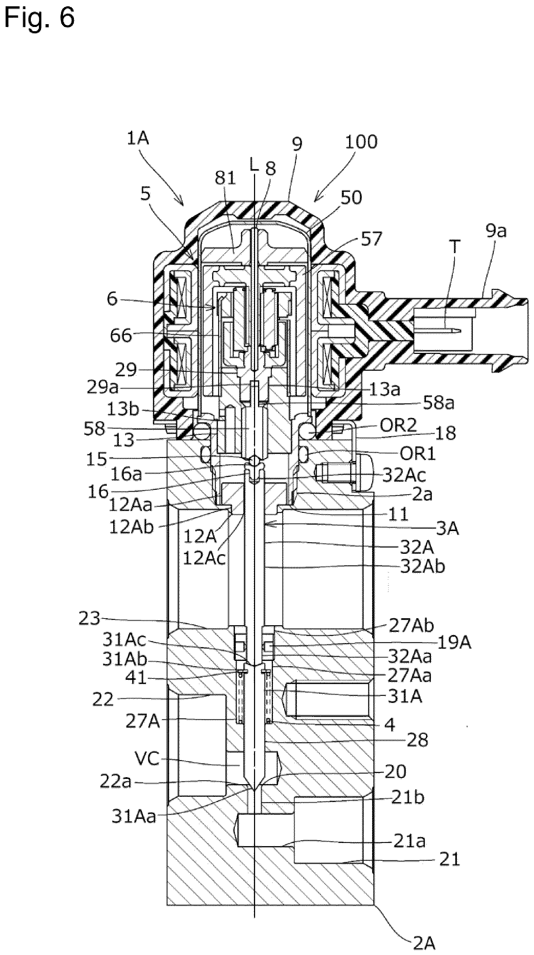

FIG. 5 is a vertical cross-sectional view of an electric valve 1A according to a second embodiment in a valve closed state, and FIG. 6 is a vertical cross-sectional view of the electric valve 1A in a valve opened state. According to the present embodiment, only the point that configurations of a valve main body 2A and a valve shaft body 3A are changed and the point that a guide member 12A and an alignment member 19A are added differ from the above-mentioned embodiment, and other components are similar, such that they are denoted with the same reference numbers, and descriptions thereof are omitted.

The valve main body 2A only differs in that an annular hole portion 27A has a lower hole portion 27Aa and an upper hole portion 27Ab having a larger diameter than the lower hole portion 27Aa, and the other configurations are the same, such that the same descriptions are omitted.

The coil spring 4 is arranged within the lower hole portion 27Aa, and the alignment member 19A is arranged on the upper hole portion 27Ab.

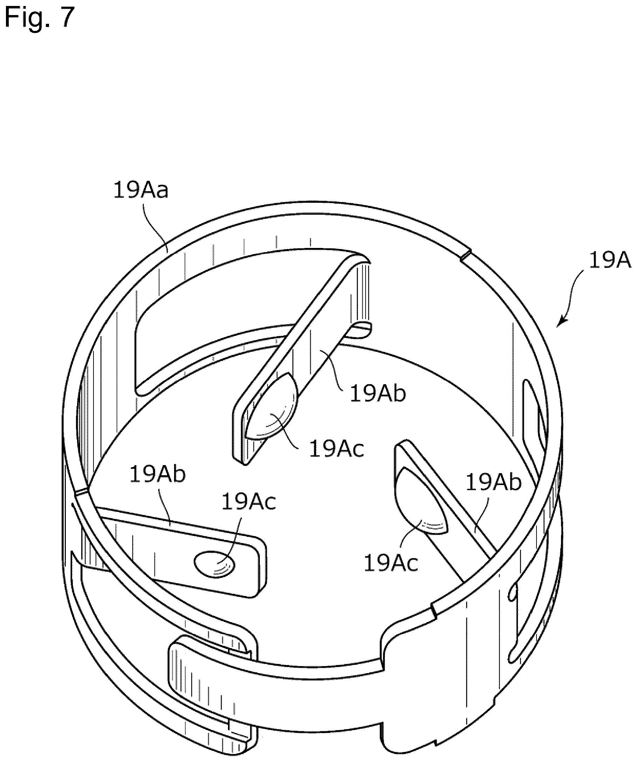

FIG. 7 is a perspective view of the alignment member 19A. The alignment member 19A is formed by press-forming a plate member made of metal. Specifically, an elongated plate member is rounded into a cylindrical shape, and both ends thereof are overlapped to form a circumferential wall 19Aa. Further, a plurality of, which according to the example is three, parts are raised along a circumferential direction to form tongue pieces 19Ab having rectangular shapes, and one end of each tongue piece 19Ab connected to the circumferential wall 19Aa serves as a base to be folded to the inner side in the radial direction. A convex portion 19Ac having a hemispherical shape is formed near a tip of each of the tongue pieces 19Ab to protrude toward a center of the circumferential wall 19Aa. Thereby, the alignment member 19A is formed.

An outer diameter of the circumferential wall 19Aa in a free state is larger than an inner diameter of the upper hole portion 27Ab, such that when inserted into the upper hole portion 27Ab, the circumferential wall 19Aa elastically deforms and reduces in diameter, the elastic force thereof causes an outer circumference of the circumferential wall 19Aa to be urged toward an inner circumference of the upper hole portion 27Ab, and frictional force generated thereby causes the alignment member 19A to be attached to the upper hole portion 27Ab. Further, additional processing such as caulking may be applied to the upper end of the upper hole portion 27Ab as a retainer for the alignment member 19A.

As illustrated in FIGs. 5 and 6, the guide member 12A having a cylindrical shape is arranged on the inner side of the holder 11. The guide member 12A is formed by coaxially consecutively connecting an upper cylindrical portion 12Aa, and a lower cylindrical portion 12Ab having a smaller diameter than the upper cylindrical portion 12Aa, wherein the lower cylindrical portion 12Ab is fit by press-fitting to the opening on the bottom wall of the recessed portion 2a of the valve main body 2A. Further, the guide member 12A includes a through hole 12Ac having a cylindrical shape that passes through in the up-down direction.

The valve shaft body 3A is composed of a lower shaft 31A serving as a first shaft, and an upper shaft 32A serving as a second shaft. The lower shaft 31A made of metal having an elongated rod shape is arranged along the axis L, and passes through the valve chamber VC of the valve main body 2A, the valve shaft insertion hole 28, and the lower hole portion 27Aa.

A valve element portion 31Aa having a conical shape that is reduced in diameter toward a downward direction is formed at a lower end of the lower valve shaft 31A, a circumferential groove 31Ab to which is fit the retaining ring 41 is formed to an outer circumference of the lower shaft 31A, and a conical seat 31Ac having a conical shape that reduces in diameter toward the lower direction is formed to an upper end of the lower shaft 31A.

The upper shaft 32A is formed by consecutively connecting a small diameter portion 32Aa arranged within the upper hole portion 27Ab, and a large diameter portion 32Ab arranged within the return flow passage 23 and the recessed portion 2a and having larger diameter than the small diameter portion 32Aa. A lower end of the small diameter portion 32Aa is spherical. Further, the large diameter portion 32Ab is fit slidably to the through hole 12Ac of the guide member 12A. The ball seat 16 having an approximately spherical surface shape is press-fit to a recessed portion 32Ac formed on an upper end of the large diameter portion 32Ab. A hardness, such as the Vickers hardness, of the ball 15 and the ball seat 16 is higher than the hardness of the upper shaft 32A and the lower shaft 31A.

In a state where the ball 15 is abutted against the ball seat 16, the screw drive member 58 and the upper shaft 32A are connected in a manner capable of transmitting driving force, or abutted, along the axis L. Further, in a state where the lower end of the small diameter portion 32Aa is abutted against the conical seat 31Ac, the upper shaft 32A and the lower shaft 31A are connected in a manner capable of transmitting drive force, or abutted, along the axis L. By having the hemispherical lower end of the small diameter portion 32Aa abut against the conical seat 31Ac, the coaxial property of the upper shaft 32A and the lower shaft 31A can be ensured.

A contact surface diameter A of the ball seat 16 and the ball 15 is smaller than a contact surface diameter B of the lower end of the small diameter portion 32Aa and the conical seat 31Ac, i.e., A<B.

In an assembling process of the electric valve 1A, at first, the retaining ring 41 is assembled to the lower valve shaft 31A, and similar to the above-described embodiment, in a state where the rotor 57 and the deceleration mechanism 6 are assembled to the inner side of the can 50, a rotor assembly in which the holder 11 is fixed to the lower end of the can 50 is prepared.

The coil spring 4 is inserted from above to the lower hole portion 27Aa of the valve main body 2A to which mechanical processing has been provided, and thereafter, the lower shaft 31 is passed from above through the recessed portion 2a and the inner side of the coil spring 4 and inserted to the valve shaft insertion hole 28. In this state, the upper end of the coil spring 4 abuts against a lower surface of the retaining ring 41.

Thereafter, the alignment member 19A is inserted to the upper hole portion 27Ab, and the guide member 12A is assembled by press-fitting to the opening on a bottom wall of the recessed portion 2a. Further, the upper shaft 32A is made to approach from above the guide member 12A, pass through the through hole 12Ac, to have the small diameter portion 32Aa inserted into the alignment member 19A, and to cause the lower end thereof abut against the conical seat 31Ac of the lower shaft 31A. In this state, the three tongue pieces 19Ab of the alignment member 19A elastically deform and the convex portion 19Ac is made to abut against the outer circumference of the small diameter portion 32Aa, such that a so-called aligning function is exerted by which the small diameter portion 32Aa will not shift with respect to the axis L.

Thereafter, similar to the first embodiment, the electric valve 1A is completed by assembling the rotor assembly. Incidentally, the alignment member 19A may be disposed in the first embodiment to perform alignment of the valve shaft body.

### (Operation of Electric Valve)

In a state where the rotor 57 of the stepping motor 5 is driven to rotate in one direction by having a valve close control signal with a predetermined number of pulses fed from the external control device to the stator 55, a rotation decelerated by the deceleration mechanism 6 is transmitted via the output shaft portion 29 to the screw drive member 58, and the screw drive member 58 is moved downward in the axis L direction.

In a state where the screw drive member 58 descends while rotating together with the ball 15, the downward driving force thereof is transmitted via the upper shaft 32A to the lower shaft 31A, and the valve element portion 31Aa is seated on the valve seat 20 to realize a valve closed state. In this state, the contact surface diameter A of the ball seat 16 and the ball 15 is smaller than the contact surface diameter B of the lower end of the small diameter portion 32Aa and the conical seat 31Ac, such that relative rotation occurs mainly between the ball seat 16 and the ball 15, and relative rotation does not easily occur between the upper shaft 32A and the lower shaft 31A. Therefore, eccentricity, i.e., misalignment, of the lower shaft 31A with respect to the axis L caused by whirling may be suppressed, and thereby, the adherence of the valve element portion 31Aa and the valve seat 20 may be enhanced. Further, since the ball seat 16 and the ball 15 are formed of a material having a relatively high hardness, friction may be suppressed even when relative sliding occurs.

Meanwhile, in a state where the rotor 57 of the stepping motor 5 is driven to rotate in the other direction by having a valve open control signal fed from a control device not shown to the stator 55, the screw drive member 58 is moved upward in the axis L direction via the deceleration mechanism 6 and the screw feeding mechanism 54. Thereby, a driving force that urges the upper shaft 32A downward is eliminated, and the lower shaft 31A is ascended according to the urging force of the coil spring 4, such that the valve element portion 31Aa is separated from the valve seat 20 to realize a valve opened state.

### (Modified Example)

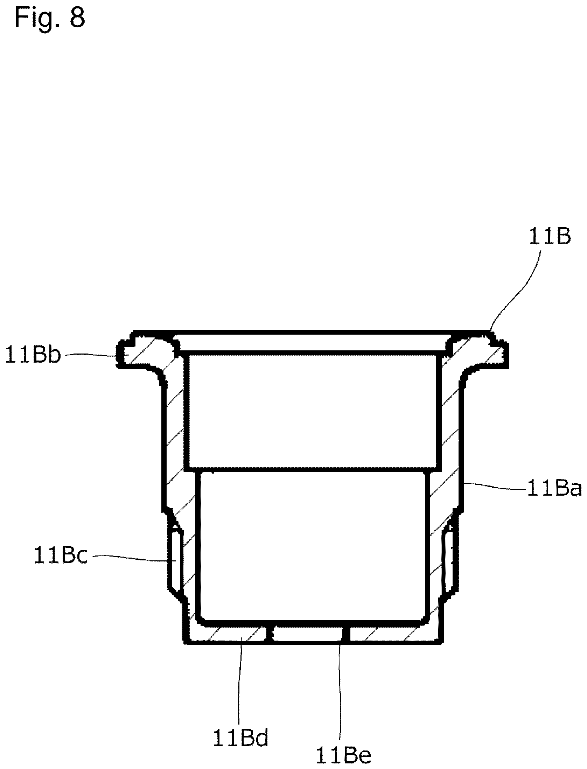

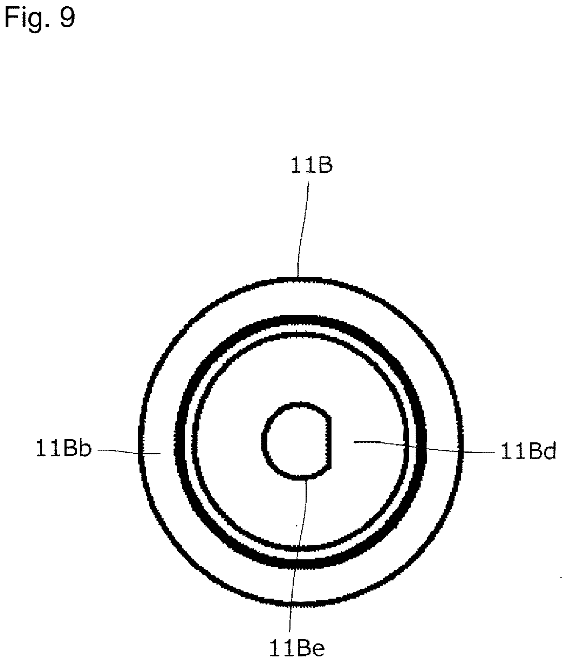

FIG. 8 is a vertical cross-sectional view of a holder 11B according to a modified example, and FIG. 9 is a top view of the holder 11B. The holder 11B according to the present modified example may be used instead of the holder 11 and the guide member 12A of the second embodiment.

The holder 11B serving as a regulation member is formed by consecutively connecting a main body 11Ba having a tubular shape, a flange portion 11Bb that extends outward in a radial direction from an upper end of the main body 11Ba and that is bonded to the can 50, and a bottom wall Bd that extends inward in a radial direction from the upper end of the main body 11Ba. A male screw 11Bc is formed on an outer circumference at a lower portion of the main body 11Ba, and an opening 11Be is formed at a center of the bottom wall Bd. The holder 11B according to the present modified example is also fixed to the valve main body 2 by having the male screw 11Bc screw-engaged to the female screw 2b formed on the inner circumference of the recessed portion 2a formed on the upper end of the valve main body 2 illustrated in FIGs 5 and 6.

An inner circumference of the opening 11Be is shaped as if a portion along a circumferential direction of a cylinder-shaped surface is connected by one flat surface parallel to the axis L in a short-circuit like manner, that is, the opening 11Be has a D-shape, i.e., non-cylindrical shape, when viewed in the axis L direction. The outer circumference of the large diameter portion 32Ab of the upper shaft 32A used in the present modified example also does not have a completely cylindrical shape, and has a D-shape, i.e., corresponding non-cylindrical shape, corresponding to the opening 11Be when viewed in the axis L direction. The non-cylindrical shape is not limited to the above example, and for example, the shape may be such that a portion of the cylinder-shaped surface along the circumferential direction is connected by two flat surfaces parallel to the axis L in a short-circuit like manner. The holder 11B and the upper shaft 32A form a rotation regulation mechanism.

In a state where the upper shaft 32A is inserted to the opening 11Be of the holder 11B, the upper shaft 32A is guided by the opening 11Be and is displaced along the axis L direction, but it cannot rotate about the axis L. Therefore, even when the screw drive member 58 rotates, the rotation of the upper shaft 32A can be prevented, i.e., restricted, and therefore, the misalignment of the upper shaft 32A may be prevented and the misalignment of the lower shaft 31A may also be suppressed.

By forming the through hole 12Ac of the guide member 12A according to the second embodiment to have a similar non-cylindrical shape, the guide member 12A may serve as a regulation member, and in that case, by forming the large diameter portion 32Ab of the upper shaft 32A to have a similar non-cylindrical shape, a rotation regulation mechanism may be configured in a similar manner, according to which the misalignment of the upper shaft 32A during the valve opening and closing operation may be suppressed. As described, the rotation regulation mechanism composed of the guide member to which the valve shaft body having a non-cylindrical shape fits and the holder may also be adopted in the first embodiment.

### (Third Embodiment)

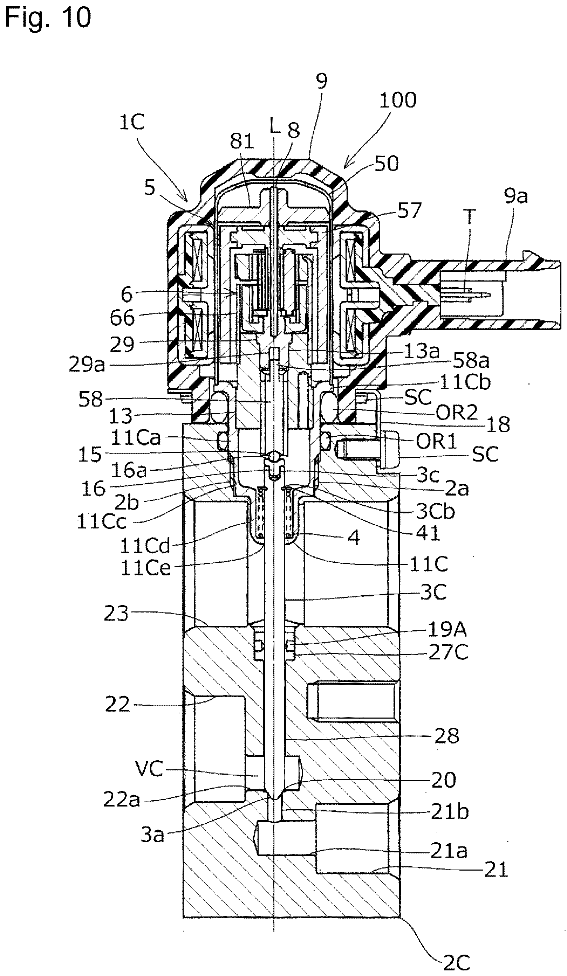

FIG. 10 is a vertical cross-sectional view of an electric valve 1C according to a third embodiment in a valve closed state. In the present embodiment, only the point that configurations of a valve main body 2C, a valve shaft body 3C, and a holder 11C are changed and the point that an alignment member 19A has been added differ from the first embodiment, and other components are similar, such that they are denoted with the same reference numbers, and descriptions thereof are omitted.

The valve main body 2C differs from the first embodiment only in the point that an annular hole portion 27C is shortened in the axial direction, and that the alignment member 19A is arranged in the interior thereof instead of the coil spring 4, and the other configurations are similar, such that duplex descriptions are omitted. The alignment member 19A is similar to the alignment member adopted in the second embodiment.

The valve shaft body 3C differs from the first embodiment only in the point that a circumferential groove 3Cb is formed in a position shifted above the return flow passage 23, and the other configurations are similar, such that duplex descriptions are omitted.

The holder 11C is formed by consecutively connecting a main body 11Ca having a tubular shape, a flange portion 11Cb that extends outward in a radial direction from an upper end of the main body 11Ca and that is bonded to a lower end of the can 50, and a retaining portion 11Cd having a cylindrical shape with a bottom bonded to a lower end of the main body 11Ca. A male screw 11Cc is formed on an outer circumference at a lower portion of the main body 11Ca. The configurations other than the retaining portion 11Cd of the holder 11C are similar to the first embodiment, such that duplex descriptions are omitted.

A bottom wall of the retaining portion 11Cd has a through hole 11Ce at a center thereof into which the valve shaft body 3C is slidably fit. The retaining ring 41 is engaged to the circumferential groove 3Cb of the valve shaft body 3C formed inward in the radial direction of the main body 11Ca. The coil spring, also simply referred to as a spring, 4 is arranged in a compressed manner in the circumference of the valve shaft body 3C between the retaining ring 41 and the bottom wall of the retaining portion 11Cd, by which the valve shaft body 3C is urged in a valve closing direction.

The electric valve 1C according to the present embodiment adopts a configuration in which the retaining portion 11Cd is arranged as an accommodation portion of the coil spring 4 to a portion of the holder 11C, instead of forming the accommodation portion of the coil spring 4 in the valve main body 2C. According to this configuration, the valve shaft body 3C, the valve main body 2C, and the motor unit 100, excluding the stator unit, may be handled as a single module. Therefore, the single module described above may be assembled in advance and may be attached to the valve main body 2C in one step, such that the ease of assembly may be improved.

The present invention is not limited to the embodiments described above. Arbitrary components of the embodiments described above may be modified within the scope of the present invention. Further, adding or omitting of an arbitrary component is enabled in the embodiments described above. For example, an example in which a planetary gear mechanism is adopted as a deceleration mechanism has been illustrated, but the present technique is not limited thereto, and a gear set may also be adopted. Further according to the present embodiment, the axis of the valve shaft body intersects with the axis of the return flow passage, but the axis of the valve shaft body does not necessarily intersect with the axis of the return flow passage, and the valve shaft body does not necessarily intersect with the return flow passage itself.

The present specification includes the following disclosure of the invention.

### (First Aspect)

An electric valve including:
a valve main body including a first flow passage through which a refrigerant is introduced, a second flow passage through which the refrigerant is flown out, a third flow passage through which the refrigerant is passed, and a valve seat formed between the first flow passage and the second flow passage;
a valve shaft body including a valve element portion configured to be seated on the valve seat;
a motor disposed on the valve main body on an opposite side with respect to the valve seat interposing the third flow passage; and
a conversion mechanism configured to convert a rotation of a rotor of the motor into a linear movement and to transmit the same to the valve shaft body.

### (Second Aspect)

The electric valve according to the first aspect,
wherein the electric valve includes a rotor of the motor, a deceleration mechanism configured to decelerate a rotation of the rotor of the motor, the conversion mechanism configured to convert a rotation having been decelerated by the deceleration mechanism into a linear movement, and a can configured to accommodate at least the deceleration mechanism, and
wherein an interior of the can is communicated with the third flow passage.

### (Third Aspect)

The electric valve according to the first aspect or the second aspect,
wherein a drive member that is displaced in an axial direction while being rotated and a ball seat that is fixed to the valve shaft body and that has an end portion having a spherical surface shape are arranged between the conversion mechanism and the valve shaft body, and
wherein a displacement of the drive member in the axial direction is transmitted to the valve shaft body by having a ball fixed to the drive member abut against the end portion of the ball seat.

### (Fourth Aspect)

The electric valve according to the third aspect,
further comprising a rotation regulation mechanism configured to regulate a rotation of the valve shaft body with respect to the valve main body.

### (Fifth Aspect)

The electric valve according to the fourth aspect,
wherein the rotation regulation mechanism is composed of a regulation member that is fixed to the valve main body and that includes an opening having a non-cylindrical shape, and the valve shaft body having a non-cylindrical shape that fits to the opening.

### (Sixth Aspect)

The electric valve according to any one of the first to fifth aspects,
wherein the valve shaft body is composed of a first shaft including the valve element portion seated on the valve seat, and a second shaft that is connected to the first shaft and that includes the ball seat, and
wherein a hardness of a material of the ball seat is higher than a hardness of a material of the first shaft and the second shaft.

### (Seventh Aspect)

The electric valve according to the sixth aspect,
wherein an end portion of the first shaft has a conical shape, an end portion of the second shaft has a spherical shape, and the end portion having the conical shape and the end portion having the spherical shape are abutted against each other, and
wherein a contact surface diameter of the ball and the ball seat is smaller than a contact surface diameter of the end portion having the conical shape and the end portion having the spherical shape.

### (Eighth Aspect)

The electric valve according to the first to fifth aspects,
wherein the valve shaft body is composed of a single rod-shaped member, and
further comprising an alignment member that is attached to the valve main body, and that applies elastic force by abutting against an outer circumference of the valve shaft body at a plurality of locations along a circumferential direction.

### (Ninth Aspect)

The electric valve according to any one of first to eighth aspects,
wherein a holder having a tubular shape configured to fix a screw bearing member including a female screw that configures the conversion mechanism to the valve main body is arranged, and
wherein the holder includes a retaining portion configured to retain a spring that urges the valve shaft body in a valve closing direction.

### (Tenth Aspect)

The electric valve according to any one of first to ninth aspects,
wherein the electric valve is used in a refrigeration cycle, and
wherein the refrigerant from a condenser is introduced into the first flow passage, the refrigerant is flown out from the second flow passage toward an evaporator, and the refrigerant from the evaporator is passed through the third flow passage.

### [Reference Signs List]

- 1, 1A:: electric valve
- 2, 2A:: valve main body
- 3, 3A:: valve shaft body
- 3a, 31Aa:: valve element portion
- 4:: coil spring
- 5:: stepping motor
- 6:: deceleration mechanism
- 20:: valve seat
- 21:: first flow passage
- 22:: second flow passage
- 23:: return flow passage (third flow passage)
- 27:: annular hole portion
- 31A:: lower shaft
- 32A:: upper shaft
- 50:: can
- 55:: stator
- 57:: rotor
- 100:: motor unit
- VC:: valve chamber

## Claims

1. An electric valve comprising:
a valve main body including a first flow passage through which a refrigerant is introduced, a second flow passage through which the refrigerant is flown out, a third flow passage through which the refrigerant is passed, and a valve seat formed between the first flow passage and the second flow passage;
a valve shaft body including a valve element portion configured to be seated on the valve seat;
a motor disposed on the valve main body on an opposite side with respect to the valve seat interposing the third flow passage; and
a conversion mechanism configured to convert a rotation of a rotor of the motor into a linear movement and to transmit the same to the valve shaft body.

2. The electric valve according to claim 1,
wherein the electric valve includes a rotor of the motor, a deceleration mechanism configured to decelerate a rotation of the rotor of the motor, the conversion mechanism configured to convert a rotation having been decelerated by the deceleration mechanism into a linear movement, and a can configured to accommodate at least the deceleration mechanism, and
wherein an interior of the can is communicated with the third flow passage.

3. The electric valve according to claim 1,
wherein a drive member that is displaced in an axial direction while being rotated and a ball seat that is fixed to the valve shaft body and that has an end portion having a spherical surface shape are arranged between the conversion mechanism and the valve shaft body, and
wherein a displacement of the drive member in the axial direction is transmitted to the valve shaft body by having a ball fixed to the drive member abut against the end portion of the ball seat.

4. The electric valve according to claim 3,
further comprising a rotation regulation mechanism configured to regulate a rotation of the valve shaft body with respect to the valve main body.

5. The electric valve according to claim 4,
wherein the rotation regulation mechanism is composed of a regulation member that is fixed to the valve main body and that includes an opening having a non-cylindrical shape, and the valve shaft body having a non-cylindrical shape that fits to the opening.

6. The electric valve according to claim 3,
wherein the valve shaft body is composed of a first shaft including the valve element portion seated on the valve seat, and a second shaft that is connected to the first shaft and that includes the ball seat, and
wherein a hardness of a material of the ball seat is higher than a hardness of a material of the first shaft and the second shaft.

7. The electric valve according to claim 6,
wherein an end portion of the first shaft has a conical shape, an end portion of the second shaft has a spherical shape, and the end portion having the conical shape and the end portion having the spherical shape are abutted against each other, and
wherein a contact surface diameter of the ball and the ball seat is smaller than a contact surface diameter of the end portion having the conical shape and the end portion having the spherical shape.

8. The electric valve according to claim 3,
wherein the valve shaft body is composed of a single rod-shaped member, and
further comprising an alignment member that is attached to the valve main body, and that applies elastic force by abutting against an outer circumference of the valve shaft body at a plurality of locations along a circumferential direction.

9. The electric valve according to claim 1,
wherein a holder having a tubular shape configured to fix a screw bearing member including a female screw that configures the conversion mechanism to the valve main body is arranged, and
wherein the holder includes a retaining portion configured to retain a spring that urges the valve shaft body in a valve closing direction.

10. The electric valve according to claim 1,
wherein the electric valve is used in a refrigeration cycle, and
wherein the refrigerant from a condenser is introduced into the first flow passage, the refrigerant is flown out from the second flow passage toward an evaporator, and the refrigerant from the evaporator is passed through the third flow passage.
